# EUROPÄISCHE PATENTSCHRIFT

(11) **EP 1 323 158 B1**
(45) Veröffentlichungstag und Bekanntmachung des Hinweises auf die Patenterteilung: **25.11.2009**
(21) Anmeldenummer: 01960239.0
(22) Anmeldetag: 23.05.2001
(51) Int. Cl.: G11B 7/24, G03H 1/02

(54) **HOLOGRAPHISCHER DATENSPEICHER**
HOLOGRAPHIC DATA MEMORY
MEMOIRE DE DONNEES HOLOGRAPHIQUE

(30) Priorität: 11.08.2000 DE 10039370
(43) Veröffentlichungstag der Anmeldung: 02.07.2003
(73) Patentinhaber: tesa scribos GmbH, 69126 Heidelberg (DE)
(72) Erfinder: STADLER, Stefan, 25474 Hasloh (DE); GERSPACH, Matthias, 76646 Bruchsal (DE); DIETRICH, Christoph, 69126 Heidelberg (DE); LEIBER, Jörn, 22529 Hamburg (DE); NOEHTE, Steffen, 69469 Weinheim (DE)
(74) Vertreter: UEXKÜLL & STOLBERG
(86) Internationale Anmeldenummer: PCT/EP2001/005933
(87) Internationale Veröffentlichungsnummer: WO 2002/015180

(56) Entgegenhaltungen:
- EP-A- 0 519 633
- EP-A- 0 528 134
- WO-A-00/17864
- DE-A- 2 312 328
- DE-A- 3 723 522

## Beschreibung

Die Erfindung betrifft einen holographischen Datenspeicher, der z.B. zum Speichern von Bilddaten wie Fotos, Logos, Schrift, usw., aber auch zum Speichern von anderen Daten verwendet werden kann.

In einem Hologramm ist über die Fläche des Hologramms verteilt optische Phaseninformation über ein Objekt enthalten, aus der sich bei Bestrahlung mit Licht, insbesondere kohärentem Licht von einem Laser, ein Bild des Objektes rekonstruieren lässt. Hologramme werden in der Technik auf vielfältige Weise genutzt, z.B. in Form von weitgehend fälschungssicheren Kennzeichnungen. Derartige Kennzeichnungen finden sich z.B. auf Kreditkarten oder Scheckkarten; sie zeigen als sogenannte Weißlicht-Hologramme auch bei Beleuchtung mit natürlichem Licht ein dreidimensionales Bild des dargestellten Objekts. Verbreitet sind fotographisch hergestellte Hologramme sowie Prägehologramme, bei denen in die Oberfläche eines Werkstoffs eine Reliefstruktur eingeprägt ist, an der das zum Wiedergeben des Objekts verwendete Licht entsprechend der in dem Hologramm gespeicherten Phaseninformation gestreut wird, so dass das rekonstruierte Bild des Objekts durch Interferenzeffekte entsteht.

Aus der DE 2 312 328 A1 ist ein holographischer Datenspeicher mit einer Speicherschicht bekannt, die neben Polymeren zusätzlich eine photolytisch spaltbare Substanz enthält. Die Datenspeicherung erfolgt durch eine lokale Änderung der Brechzahl der Speicherschicht, hervorgerufen durch Spaltung der Zusatzsubstanz unter Einwirkung von Strahlung. Dabei kann optische Phaseninformation über die lokale optische Weglänge gespeichert werden; beim Auslesen der Information wird die Speicherschicht in Transmission durchstrahlt.

Die Herstellung eines derartigen holographischen Datenspeichers ist jedoch relativ komplex, da zunächst eine geeignete photolytisch spaltbare Substanz, d.h. eine Substanz, die eine hinreichend große Änderung der Brechzahl ermöglicht, in die Polymerschicht in hinreichender Menge eingearbeitet werden muss. Dies erfordert eine aufwendige Abstimmung des Herstellungsprozesses. Ferner hat ein derartiger holographischer Datenspeicher den Nachteil, dass das Einschreiben von Information nur mit speziell ausgewählter Strahlung, die nämlich zu der photolytischen Zersetzung führt, erfolgen kann.

In der WO 00/17864 A1 ist ein Datenspeicher mit einem optischen Informationsträger beschrieben, der eine als Speicherschicht eingerichtete Polymerfolie enthält. Die Polymerfolie besteht z.B. aus biaxial orientiertem Polypropylen. Bei dem vorbekannten Datenspeicher ist die Polymerfolie in mehreren Lagen spiralartig auf einen Wickelkern aufgewickelt, wobei sich zwischen benachbarten Lagen jeweils eine Adhäsionsschicht befindet. In den Datenspeicher lassen sich Informationen einschreiben, indem die Polymerfolie mit Hilfe eines Schreibstrahls eines Datenlaufwerks lokal erwärmt wird, wodurch sich die Brechzahl der Polymerfolie und das Reflexionsvermögen an der Grenzfläche der Polymerfolie lokal ändern. Dies kann mit Hilfe eines Lesestrahls in dem Datenlaufwerk erfasst werden, da der Lesestrahl je nach eingeschriebener Information lokal mehr oder weniger stark an der Grenzfläche der Polymerfolie reflektiert wird. Durch Fokussieren des Schreibstrahls oder Lesestrahls lässt sich Information gezielt in eine vorgewählte Lage des Informationsträgers einschreiben bzw. daraus auslesen.

Aus der DE 37 23 522 A1 ist ein Speichermedium zur reversiblen optischen Informationsspeicherung bekannt, das einen Film aus einem polymeren Mischsystem enthält. Die Information kann durch lokale Aufheizung des Speichermediums über eine lokale Variation des Mischungszustandes eingegeben werden.

Die EP 0 519 633 A1 zeigt einen Datenspeicher mit einem Substrat in Form eines Bandes, das eine optische Aufzeichnungsschicht trägt, die mittels eines Lasers beschreibbar ist.

Die WO 01/45111 A1 ist Stand der Technik gemäß Artikel 54(3) EPÜ und offenbart ein holographisches Aufzeichnungsmedium mit einem amorphen Trägermaterial, das z.B. eine anorganische kristalline oder glasartige Matrix enthält und in das lichtempfindliche Moleküleinheiten eingebettet sind. Oberhalb einer Phasenübergangstemperatur das Trägermaterials lassen sich die Moleküleinheiten durch Belichtung orientieren.

Es ist Aufgabe der Erfindung, einen holographischen Datenspeicher zu schaffen, der kostengünstig ist und breite Anwendungsmöglichkeiten hat.

Diese Aufgabe wird gelöst durch einen holographischen Datenspeicher mit den Merkmalen des Anspruchs 1 sowie die Verwendung eines Datenspeichers gemäß Anspruch 10. Ein Verfahren zum Eingeben von Information in einen derartigen Datenspeicher ist im Anspruch 12 angegeben, ein Verfahren zum Auslesen von Information aus einem derartigen Datenspeicher im Anspruch 16. Vorteilhafte Ausgestaltungen der Erfindung sind in den abhängigen Ansprüchen angeführt.

Der erfindungsgemäße holographische Datenspeicher weist eine als Speicherschicht eingerichtete Polymerfolie auf, deren Brechzahl lokal durch Erwärmung veränderbar ist. Die Polymerfolie ist zum Speichern von optischer Phaseninformation über die lokale optische Weglänge in der beim Auslesen von Information in Transmission durchstrahlten Polymerfolie eingerichtet. In der Polymerfolie lässt sich also lokal, d.h. in einem zum Speichern einer Informationseinheit vorgesehenen Bereich, Phaseninformation ablegen, indem in diesem Bereich die Brechzahl durch Erwärmung verändert wird. Die lokale Änderung der Brechzahl bewirkt eine Änderung der optischen Weglänge der beim Auslesen von Information aus der Polymerfolie verwendeten Strahlung (die die Polymerfolie in Transmission durchstrahlt). Die optische Weglänge ist nämlich das Produkt aus der geometrischen Weglänge und der Brechzahl; über eine Änderung der Brechzahl lässt sich also die lokale Phasenlage der beim Auslesen von Information eingesetzten Strahlung beeinflussen, d.h. die gewünschte Phaseninformation abspeichern. Der lokale Bereich zum Speichern einer Informationseinheit (im Folgenden als "Pit" bezeichnet) hat typischerweise lineare Abmessungen (d.h. zum Beispiel eine Seitenlänge oder einen Durchmesser) in der Größenordnung von 0,5 µm bis 1 µm, aber auch andere Größen sind möglich.

Der erfindungsgemäße holographische Datenspeicher lässt sich also als refraktives Phasenhologramm oder Transmissionshologramm anwenden. Dabei wird die gewünschte Phaseninformation lokal über eine Änderung der Brechzahl abgespeichert, und zum Auslesen von Information wird die Polymerfolie durchstrahlt. Im Gegensatz dazu wird bei dem aus der WO 00/17864 bekannten Datenspeicher das Reflexionsvermögen an der Grenzfläche der Polymerfolie verändert, um beim Lesevorgang Unterschiede in der Amplitude eines reflektierten Lesestrahls registrieren zu können. Der erfindungsgemäße holographische Datenspeicher ist kostengünstig und kann auf vielfältige Weise angewendet werden, wie sich aus dem Folgenden ergibt.

Bei dem erfindungsgemäßen holographischen Datenspeicher ist die Polymerfolie biaxial verstreckt, z.B. indem sie bei der Herstellung innerhalb ihrer Ebene in zwei senkrecht aufeinanderstehenden Richtungen vorgespannt wird. Bei einer verstreckten. Polymerfolie ist im Folieumaterial eine hohe Energiedichte gespeichert. Durch Erwärmung unter Deposition einer verhältnismäßig geringen Energiemenge pro Flächeneinheit, z.B. mit Hilfe eines Schreibstrahls, kann eine relativ starke Materialänderung (z.B. eine Materialverdichtung) durch Rückverformung verhalten werden; die in einer lokalen Änderung der Brechzahl und somit in einer Änderung der optischen Weglänge in der Polymerfolie resultiert. Biaxial verstreckte Polymerfolien lassen sich aus Massenkunststoffen herstellen, so dass der holographische Datenspeicher kostengünstig ist.

Geeignete Materialien für die Polymerfolie sind z.B. Polypropylen, Polyester oder Polyvinylchlorid, wobei Polymerfolie, die ein derartiges Material aufweisen, vorzugsweise biaxial verstreckt sind. Eine höhere Temperaturstabilität und damit auch eine verbesserte Alterungsbeständigkeit und Lagerstabilität des holographischen Datenspeichers und eine erhöhte Sicherheit gegen Datenverlust infolge von Alterungsprozessen lässt sich mit Polymerfolien erzielen, die einen erhöhten Kristallitschmelzpunkt haben. Dabei beträgt der Kristallitschmelzpunkt vorzugsweise mindestens 170 °C. Beispiele für derartige Materia an sind Polyethylennaphthalat (PEN), Polyethylenterephthala (PET), Polymethylpenten (PMP; auch Poly-2-methylpenten) sowie Polyimid, wobei auch eine Polymerfolie aus derartigen Materialien vorzugsweise biaxial verstreckt ist.

Bevorzugte Dicken der Polymerfolie liegen im Bereich von 10 µm bis 100 µm, vorzugsweise um oder unter 50 µm, aber auch kleiner oder größere Dicken sind denkbar.

Bei einer bevorzugten Ausgestaltung der Erfindung ist hinter der Polymerfolie eine Reflexionsschicht (z.B. aus Aluminium) angeordnet. Die zum Auslesen von Information verwendete Strahlung, also insbesondere Laserlicht, wird an dieser Reflexionsschicht zurückgeworfen, so dass die Polymerfolie beim Auslesen von Information zweimal in Transmission durchstrahlt wird. Vorzugsweise ist der Abstand der Pits zu der Reflexionsschicht (d.h. die Dicke der an die Reflexionsschicht angrenzenden Zone der Polymerfolie, in der die Brechzahl nicht lokal verändert ist) so eingerichtet, dass störende Interferenz- und Überlagerungseffekte vermieden werden. Die Ausgestaltung des holographischen Datenspeichers mit einer Reflexionsschicht hinter der Polymerfolie hat den Vorteil, dass die Anordnung auf einem mechanischen Träger oder auch direkt auf einem mit Information versehenen Gegenstand angebracht werden kann, da das die gespeicherte Information repräsentierende Bild nicht hinter der Polymerfolie rekonstruiert werden muss.

Der Polymerfolie kann ein Absorberfarbstoff zugeordnet sein, der dazu eingerichtet ist, einen zum Eingeben von Information dienenden Schreibstrahl zumindest teilweise zu absorbieren und die dabei erzeugte Wärme zumindest teilweise lokal an die Polymerfolie abzugeben. Ein derartiger Absorberfarbstoff ermöglicht eine zur Veränderung der Brechzahl ausreichende lokale Erwärmung der Polymerfolie bei relativ geringer Intensität des Schreibstrahls. Vorzugsweise ist der Absorberfarbstoff in einer auf der Polymerfolie angeordneten Absorberschicht angeordnet. Er kann aber auch dem Material der Polymerfolie beigemischt sein; Mischformen sind ebenfalls denkbar. Die Absorberschicht weist bevorzugt eine dünne Schicht (z.B. einer Dicke von 1 µm bis 5 µm) aus einem optisch transparenten Polymer auf (z.B. aus Polymethylmethacrylat (PMMA) oder, bei Anwendungen für höhere Temperatur, aus Polymethylpenten, Polyetheretherketon (PEEK) oder Polyetherimid), das als Matrix oder Bindemittel für die Moleküle des Absorberfarbstoffs dient. Das Absorptionsmaximum des Absorberfarbstoffs sollte mit der Lichtwellenlänge des verwendeten Schreibstrahls zusammenfallen, um eine effiziente Absorption zu erzielen. Für eine Lichtwellenlänge von 532 nm eines von einem Laser erzeugten Schreibstrahls sind z.B. Farbstoffe aus der Sudanrot-Familie (Diazofarbstoffe) oder Eosinscharlach geeignet. Für die gebräuchlichen Laserdioden mit einer Lichtwellenlänge von 665 nm oder 680 nm sind grüne Farbstoffe, z.B. aus der Styryl-Familie (die als Laserfarbstoffe gebräuchlich sind), besser geeignet.

Bei einer bevorzugten Ausgestaltung der Erfindung weist der holographische Datenspeicher eine Klebeschicht zum Aufkleben des Datenspeichers auf einen Gegenstand auf. Die Klebeschicht ermöglicht es, den Datenspeicher schnell und problemlos auf einen gewünschten Gegenstand zu kleben, z.B. um den Datenspeicher als maschinenlesbares Etikett zu nutzen, in dem Information über den Gegenstand gespeichert ist. Als Klebeschicht eignet sich insbesondere eine Selbstklebeschicht oder eine Schicht mit einem druckempfindlichen Kleber, die vorzugsweise im Lieferzustand des Datenspeichers mit einer abziehbaren Schutzabdeckung (z.B. aus einer Folie oder einem Silikonpapier) versehen ist.

Außer den bisher erwähnten Schichten oder Lagen kann der erfindungsgemäße Datenspeicher auch zusätzliche Lagen aufweisen, z.B. eine Schutzschicht aus einem transparenten Lack oder Polymer, die vor der Polymerfolie oder der Absorberschicht angeordnet ist, oder einen mechanischen Träger, der sich hinter der Reflexionsschicht befindet. Eine optionale Klebeschicht ist vorzugsweise hinter der Reflexionsschicht oder hinter dem mechanischen Träger angeordnet.

Die zu speichernde Information kann in den erfindungsgemäßen holographischen Datenspeicher durch ein Verfahren eingegeben werden, bei dem in einem Hologramm eines Speicherobjekts enthaltene Phaseninformation als zweidimensionale Anordnung berechnet wird und ein Schreibstrahl einer Schreibeinrichtung, vorzugsweise eines Laserlithographen, auf eine Speicherschicht und/oder gegebenenfalls die zugeordnete Absorberschicht des Datenspeichers gerichtet und entsprechend der zweidimensionalen Anordnung so angesteuert wird, dass die lokale optische Weglänge in der als Speicherschicht eingerichteten Polymerfolie gemäß der Phaseninformation durch lokale Änderung der Brechzahl eingestellt wird. Da die physikalischen Vorgänge bei der Streuung von Licht an einem Speicherobjekt bekannt sind, kann ein herkömmlicher Aufbau zum Erzeugen eines Hologramms (bei dem z.B. kohärentes Licht von einem Laser, das von einem Objekt (Speicherobjekt) gestreut wird, mit einem kohärenten Referenzstrahl zur Interferenz gebracht wird und das dabei entstehende Interferenzmuster als Hologramm aufgenommen wird) mit Hilfe eines Computerprogramms simuliert und das Interferenzmuster bzw. die darin enthaltene Phaseninformation als zweidimensionale Anordnung (zweidimensionaler Array) berechnet werden. Die Auflösung eines geeigneten Laserlithographen beträgt typischerweise etwa 50 000 dpi (dots per inch). Damit kann die Brechzahl in der Polymerfolie lokal in Bereichen oder Pits einer Größe von etwa 0,5 µm bis 1 µm verändert werden. Die Schreibgeschwindigkeit und andere Details hängen unter anderem von den Parametern des Schreiblasers (Laserleistung, Lichtwellenlänge) und der Belichtungsdauer ab.

Die Phaseninformation wird also vorzugsweise in Form von Pits vorgegebener Größe in die Speicherschicht eingegeben. Dabei kann in einem Pit die Phaseninformation in binär kodierter Form gespeichert werden. Das heißt, im Bereich eines gegebenen Pits nimmt die Polymerfolie nur einen von zwei möglichen Werten für die Brechzahl an. Diese Werte unterscheiden sich vorzugsweise deutlich, damit in der Praxis vorkommende Zwischenwerte für die Brechzahl, die nahe bei dem einen oder dem anderen Wert liegen, eindeutig dem einen oder dem anderen Wert zugeordnet werden können, um die Information zuverlässig und eindeutig zu speichern.

Alternativ kann in einem Pit die Phaseninformation in kontinuierlich kodierter Form gespeichert werden, wobei die lokale optische Weglänge in dem Pit aus einem vorgegebenen Wertebereich ausgewählt wird. Dies bedeutet, dass in einem gegebenen Pit die Brechzahl der Polymerfolie einen beliebigen Wert aus einem vorgegebenen Wertebereich annehmen kann. In diesem Fall lässt sich die Information also "in Graustufen" abspeichern, so dass jedem Pit der Informationsgehalt von mehr als einem Bit zukommt.

Bei einem Verfahren zum Auslesen von Information aus einem erfindungsgemäßen holographischen Datenspeicher wird Licht, vorzugsweise kohärentes Licht (z.B. von einem Laser), großflächig auf eine Speicherschicht des Datenspeichers gerichtet, und die Speicherschicht des Datenspeichers wird in Transmission durchstrahlt, wobei das Licht gegebenenfalls an der Reflexionsschicht (falls eine solche vorhanden ist) hinter der als Speicherschicht eingerichteten Polymerfolie reflektiert wird. Als Rekonstruktion der in dem durchstrahlten Bereich enthaltenen Information wird ein holographisches Bild in einem Abstand zu dem Datenspeicher erfasst, z.B. mit einem CCD-Sensor, der mit einer Datenverarbeitungseinrichtung verbunden ist.

Unter dem Begriff "großflächig" ist eine Fläche zu verstehen, die deutlich größer ist als die Fläche eines Pits. In diesem Sinne ist z.B. eine Fläche von 1 mm² großflächig. Für das Schema, nach dem Information in einem erfindungsgemäßen holographischen Datenspeicher abgelegt und ausgelesen wird, gibt es viele verschiedene Möglichkeiten. Es ist denkbar, den Datenspeicher auf einmal auszulesen, indem die gesamte Fläche der als Speicherschicht eingerichteten Polymerfolie auf einmal durchstrahlt wird. Insbesondere bei größeren Flächen ist es jedoch vorteilhaft, die zu speichernde Information auf eine Anzahl oder Vielzahl von Einzelbereichen aufzuteilen (z.B. mit einer jeweiligen Fläche von 1 mm²) und die Information lediglich aus einem vorgegebenen Einzelbereich auf einmal auszulesen.

Beim Auslesen von Information wirkt der durchstrahlte Bereich der Polymerfolie wie ein Beugungsgitter, wobei das einfallende Licht infolge der lokal variierenden Brechzahl bzw. optischen Weglänge in einer definierten Art und Weise abgelenkt wird. Das abgelenkte Licht formt ein holographisches Bild des Speicherobjektes. Dieses Bild stellt die Rekonstruktion der über die variierende lokale optische Weglänge (Brechzahlmodulation) kodierten Information dar.

Der erfindungsgemäße holographische Datenspeicher lässt sich für unterschiedliche Arten von Speicherobjekten nutzen. So können sowohl die in Bildern wie z.B. Fotographien, Logos, Schrift, usw. enthaltene Information als auch maschinenlesbare Daten abgespeichert und ausgelesen werden. Letzteres erfolgt beispielsweise in Form sogenannter Datenseiten, wobei die in einem Hologramm eines graphischen Bitmusters (das die Dateninformation darstellt) enthaltene Phaseninformation wie erläutert in die Polymerfolie eingegeben wird. Beim Auslesen entsteht ein holographisches Bild dieses graphischen Bitmusters. Die darin enthaltene Information kann z.B. mit Hilfe eines genau justierten CCD-Sensors erfasst und über zugehörige Auswertesoftware verarbeitet werden. Für die Wiedergabe von Bildern, bei denen es nicht auf eine hohe Genauigkeit ankommt, reicht im Prinzip bereits eine einfache Mattscheibe oder z.B. eine Kamera mit einem LCD-Bildschirm.

Bei der holographischen Speicherung maschinenlesbarer Daten ist es vorteilhaft, dass die Information nicht sequentiell ausgelesen werden muss, sondern dass ein ganzer Datensatz auf einmal erfasst werden kann, wie erläutert. Sollte die Oberfläche der Speicherschicht beschädigt sein, so führt dies im Gegensatz zu einem herkömmlichen Datenspeicher nicht zu einem Datenverlust, sondern lediglich zu einer Verschlechterung der Auflösung des beim Auslesen der Information rekonstruierten holographischen Bildes, was in der Regel unproblematisch ist.

Im Folgenden wird die Erfindung anhand von Ausführungsbeispielen weiter erläutert. Die Zeichnungen zeigen in
- Figur 1: eine schematische Draufsicht auf einen Ausschnitt aus einem erfindungsgemäßen holographischen Datenspeicher,
- Figur 2: einen Längsschnitt durch den holographischen Daten- speicher aus Figur 1 und
- Figur 3: einen Längsschnitt durch den holographischen Daten- speicher aus Figur 1, wobei die Vorgänge beim Auslesen von Information in schematischer Weise veranschaulicht sind.

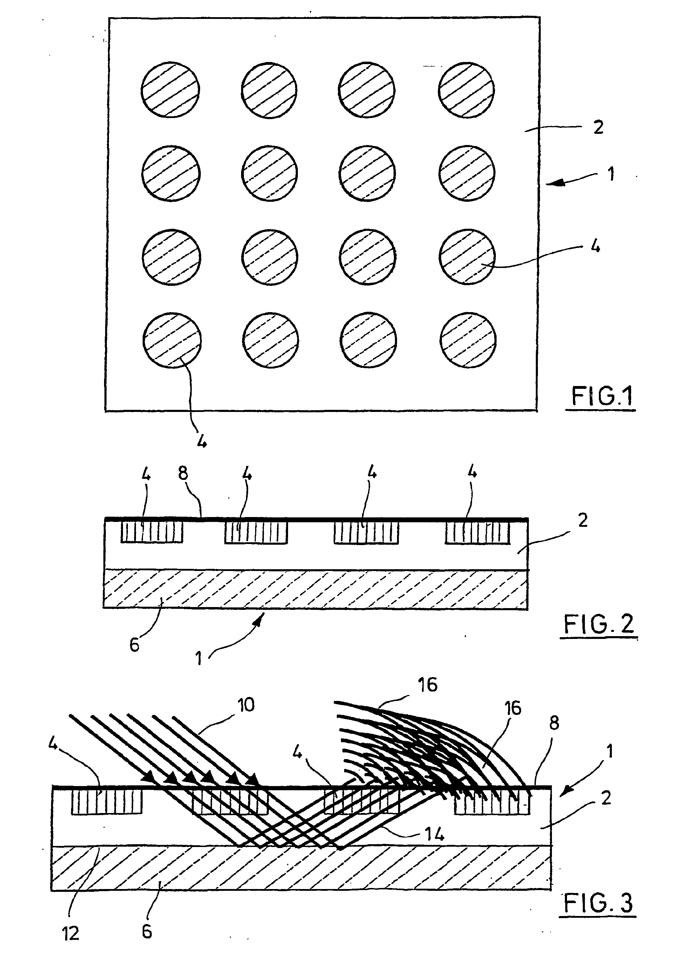

Figur 1 ist eine schematische Draufsicht auf eine Ausführungsform eines holographischen Datenspeichers 1, in den Information eingegeben ist. Der Datenspeicher 1 weist eine als Speicherschicht 2 eingerichtete Polymerfolie auf, die im Ausführungsbeispiel aus biaxial orientiertem Polypropylen (BOPP) besteht und eine Dicke von 35 µm hat. Die Brechzahl von bipolar orientiertem Polypropylen lässt sich lokal durch Erwärmung verändern, was zum Speichern von Information ausgenutzt werden kann, wie weiter oben erläutert. Vorzugsweise hat die Speicherschicht 2 eine Dicke im Bereich zwischen 10 µm und 100 µm, aber andere Dicken sind ebenfalls möglich. Beispiele für weitere vorteilhafte Materialien für die Polymerfolie der Speicherschicht 2 sind weiter oben angeführt.

In dem Datenspeicher 1 ist Information in Form von Pits 4 abgelegt. In dem Bereich eines Pits 4 hat die Speicherschicht 2 eine andere Brechzahl als in den Zonen zwischen den Pits 4; der Begriff "Pit" ist also allgemeiner als in seiner ursprünglichen Bedeutung ("Loch") zu verstehen. Dabei kann in einem Pit die Information in binär kodierter Form gespeichert sein, indem die Brechzahl nur zwei verschiedene Werte annimmt (wobei einer der beiden Werte auch mit der Brechzahl in der Speicherschicht 2 in den Zonen zwischen den Pits 4 übereinstimmen kann). Es ist auch möglich, in einem Pit 4 die Information in kontinuierlich kodierter Form zu speichern, wobei die Brechzahl innerhalb des Pits 4 einen beliebig ausgewählten Wert aus einem vorgegebenen Wertebereich einnehmen kann. Anschaulich gesprochen, ist bei Speicherung in binär kodierter Form ein Pit "schwarz" oder "weiß", während es bei Speicherung in kontinuierlich kodierter Form auch alle dazwischenliegenden Grauwerte annehmen kann.

Im Ausführungsbeispiel hat ein Pit 4 einen Durchmesser von etwa 0,8 µm. Andere Formen als kreisrunde Pits 4 sind ebenfalls möglich, z.B. quadratische oder rechteckige Pits, aber auch andere Größen. Vorzugsweise beträgt die typische Abmessung eines Pits etwa 0,5 µm bis 1,0 µm. Die Figur 1 ist also eine stark vergrößerte Darstellung und zeigt lediglich einen Ausschnitt aus dem Datenspeicher 1.

In Figur 2 ist ein Ausschnitt aus dem Datenspeicher 1 in schematischem Längsschnitt dargestellt, und zwar nicht maßstabsgetreu. Es ist zu erkennen, dass sich ein Pit 4 nicht über die volle Dicke der Speicherschicht 2 erstreckt. In der Praxis ist aufgrund des Schreibverfahrens zum Eingeben von Information, bei dem die Speicherschicht 2 im Bereich eines Pits 4 erwärmt wird, die Übergangszone im unteren Bereich eines Pits 4 zu dem unteren Bereich der Speicherschicht 2 kontinuierlich, d.h. die Brechzahl ändert sich in dieser Zone allmählich und nicht so scharf abgegrenzt, wie in Figur 2 gezeigt.

Unter (d.h. hinter) der Speicherschicht 2 befindet sich eine Reflexionsschicht 6, die im Ausführungsbeispiel aus Aluminium besteht. Die Reflexionsschicht 6 kann auch dann ihre Funktion erfüllen, wenn sie wesentlich dünner ist als die Speicherschicht 2.

Auf die Oberseite der Speicherschicht 2 ist eine Absorberschicht 8 aufgetragen. Im Ausführungsbeispiel weist die Absorberschicht 8 den Absorberfarbstoff Eosinscharlach auf, dessen Moleküle in eine Matrix aus einem optisch transparenten Polymer, und zwar Polymethylmethacrylat (PMMA), eingebettet sind. Die Absorberschicht 8 hat im Ausführungsbeispiel eine Dicke von 1 µm. Eosinscharlach absorbiert besonders gut Licht im Wellenlängenbereich um 532 nm; diese Wellenlänge ist für einen Schreibstrahl eines Laserlithographen zum Eingeben von Information in den Datenspeicher 1 besonders geeignet. Beispiele für andere Materialien der Absorberschicht 8 sind weiter oben angegeben. So eignen sich grüne Farbstoffe, z.B. aus der Styryl-Familie, besonders für Lichtwellenlängen von 665 nm oder 680 nm, bei denen die Laserdioden derzeitiger DVD-Geräte arbeiten; derartige Laserdioden können direkt moduliert werden, was die Pulserzeugung wesentlich vereinfacht und verbilligt.

Die Absorberschicht 8 hat eine bevorzugte optische Dichte im Bereich von 0,2 bis 1,0; andere Werte sind jedoch ebenfalls denkbar. Die optische Dichte ist ein Maß für die Absorption, hier bezogen auf die Lichtwellenlänge eines Schreibstrahls. Definiert ist die optische Dichte als negativer dekadischer Logarithmus der Transmission durch die Absorberschicht, was mit dem Produkt des Extinktionskoeffizienten bei der verwendeten Wellenlänge des Schreibstrahls, der Konzentration des Absorberfarbstoffs in der Absorberschicht 8 und der Dicke der Absorberschicht 8 übereinstimmt.

Die Absorberschicht 8 erleichtert das Eingeben von Information in den Datenspeicher 1. Denn wenn ein Schreibstrahl auf den Bereich eines Pits 4 fokussiert wird, wird er zumindest teilweise in der Absorberschicht 8 absorbiert. Die dabei frei werdende Wärme überträgt sich weitgehend auf die Speicherschicht 2 und bewirkt so eine lokale Änderung der Brechzahl in der Speicherschicht 2 im Bereich des Pits 4. Es ist jedoch möglich, bei Verwendung sehr kurzer Laserpulse ganz auf den Absorberfarbstoff zu verzichten.

Um in den Datenspeicher 1 Information einzugeben, wird zunächst in einem Hologramm eines Speicherobjekts enthaltene Phaseninformation als zweidimensionale Anordnung berechnet. Dies kann als Simulation eines klassischen Aufbaus zum Erzeugen eines fotographisch erfassten Hologramms durchgeführt werden, bei dem kohärentes Licht von einem Laser nach Streuung an dem Speicherobjekt mit einem kohärenten Referenzstrahl zur Interferenz gebracht und das dabei entstehende Interferenzmuster als Hologramm aufgenommen wird. Die zweidimensionale Anordnung (zweidimensionaler Array) enthält dann die Information, die zum Ansteuern des Schreibstrahls eines Laserlithographen erforderlich ist. Im Ausführungsbeispiel besitzt der Laserlithograph eine Auflösung von etwa 50 000 dpi (d.h. etwa 0,5 µm). Der Schreibstrahl des Laserlithographen wird im gepulsten Betrieb (typische Pulsdauer von etwa 1 µs bis 10 µs bei einer Strahlleistung von etwa 1 mW bis 10 mW zum Eingeben eines Pits 4) über die Oberseite des Datenspeichers 1 geführt, um die gewünschte Information sequentiell in den Datenspeicher 1 (oder einen vorgewählten Bereich des Datenspeichers 1) einzugeben. Dabei erwärmt der Schreibstrahl die Absorberschicht 8 entsprechend dem zweidimensionalen Array und erzeugt so die Pits 4, wie oben erläutert.

In Figur 3 ist in schematischer Weise veranschaulicht, wie die in dem Datenspeicher 1 gespeicherte Information ausgelesen werden kann. Dazu wird kohärentes Licht von einem Laser (vorzugsweise einer Wellenlänge, die von der Absorberschicht 8 nur gering absorbiert wird) auf die Oberseite des Datenspeichers 1 gerichtet. Der Übersichtlichkeit halber ist von diesem vorzugsweise parallel einfallenden kohärenten Licht in Figur 3 nur ein kleiner Ausschnitt dargestellt, der mit 10 bezeichnet ist (einfallender Lesestrahl). In der Praxis ist das kohärente Licht großflächig auf die Speicherschicht 2 gerichtet und überdeckt einen Bereich von z.B. 1 mm². Denn zur Rekonstruktion der abgespeicherten Information muss das von vielen Pits 4 ausgehende Licht erfasst werden. Die Intensität des einfallenden Lesestrahls 10 ist zu schwach, um die Brechzahl in der Speicherschicht 2 und somit die abgespeicherte Information zu verändern.

Der einfallende Lesestrahl 10, der aus praktischen Gründen unter einem Winkel auf die Oberfläche des Datenspeichers 1 auftrifft, wird an der Grenzfläche 12 zwischen der Speicherschicht 2 und der Reflexionsschicht 6 reflektiert, so dass ein reflektierter Lesestrahl 14 von der Grenzfläche 12 ausgeht und dabei die Pits 4 durchdringt. Da die lokale Brechzahl der Speicherschicht 2 je nach Pit 4 unterschiedlich ist, wird die lokale optische Weglänge innerhalb des reflektierten Lesestrahls 14 variiert, so dass es zu Phasenverschiebungen kommt. Dies hat zur Folge, dass von dem Datenspeicher 1 nach Art eines Beugungsgitters Kugelwellen 16 ausgehen, die die gespeicherte Phaseninformation enthalten. In einigem Abstand von dem Datenspeicher 1 kann mit einem Detektor ein holographisches Bild erfasst werden, das durch Interferenz der Kugelwellen 16 zustande kommt.

Der für den Detektor erforderliche Aufwand und die Weiterverarbeitung des erfassten holographischen Bilds hängen von der Art des Speicherobjekts ab, wie weiter oben bereits erläutert. Für die Wiedergabe von maschinenlesbaren Daten (Datenseiten) eignet sich besonders ein mit einer Datenverarbeitungseinrichtung verbundener CCD-Sensor, während für eine reine Bildwiedergabe auch ein einfacherer Detektor sinnvoll ist, insbesondere dann, wenn die Bilddaten nicht weiterverarbeitet werden sollen.

Der Datenspeicher 1 kann außer den in Figur 2 erkennbaren Schichten zusätzlich Lagen aufweisen, z.B. oberhalb der Absorberschicht 8 eine transparente Schutzschicht und unterhalb der Reflexionsschicht 6 eine Trägerlage. Unterhalb dieser Trägerlage oder auch direkt unterhalb der Reflexionsschicht 6 ist bei bevorzugten Ausführungsformen eine Klebeschicht angeordnet. Mit Hilfe dieser Klebeschicht kann der Datenspeicher 1 direkt auf einen Gegenstand aufgeklebt werden. Der Datenspeicher 1 kann auf diese Weise als eine Art Etikett eingesetzt werden, das praktisch unsichtbare Informationen enthält, die sich nur mit Hilfe eines holographischen Aufbaus zum Auslesen von Information entschlüsseln lassen.

Wenn z.B. ein im sichtbaren Licht unsichtbarer Absorberfarbstoff (der z.B. im Infraroten absorbiert) oder aber kein Absorberfarbstoff verwendet wird oder wenn eine Absorberschicht nach dem Eingeben von Information in den Datenspeicher abgewaschen wird, lässt sich der Datenspeicher weitgehend transparent und sehr unauffällig gestalten. Ein derartiger Datenspeicher führt nicht zu einer optischen Beeinträchtigung eines Gegenstands, an dem er als Etikett benutzt wird.

## Patentansprüche

1. Holographischer Datenspeicher, mit einer Speicherschicht (2), deren Brechzahl lokal veränderbar ist und die zum Speichern von optischer Phaseninformation über die lokale optische Weglänge in der beim Auslesen von Information in Transmission durchstrahlten Speicherschicht (2) eingerichtet ist, **dadurch gekennzeichnet, dass** die Speicherschicht eine als Speicherschicht eingerichtete Polymerfolie (2) ist, dass die Polymerfolie (2) biaxial verstreckt ist und dass deren Brechzahl lokal durch Erwärmung veränderbar ist.

2. Holographischer Datenspeicher nach Anspruch 1, **dadurch gekennzeichnet, dass** die Polymerfolie (2) ein Material aufweist, das aus der folgenden Gruppe ausgewählt ist: Polypropylen, Polyester, Polyvinylchlorid, Polyethylennaphthalat, Polyethylenterephthalat, Polymethylpenten, Polyimid.

3. Holographischer Datenspeicher nach Anspruch 1 oder 2, **dadurch gekennzeichnet, dass** hinter der Polymerfolie (2) eine Reflexionsschicht (6) angeordnet ist.

4. Holographischer Datenspeicher nach einem der Ansprüche 1 bis 3, **dadurch gekennzeichnet, dass** der Polymerfolie (2) ein Absorberfarbstoff (8) zugeordnet ist, der dazu eingerichtet ist, einen zum Eingeben von Information dienenden Schreibstrahl zumindest teilweise zu absorbieren und die dabei erzeugte Wärme zumindest teilweise lokal an die Polymerfolie (2) abzugeben.

5. Holographischer Datenspeicher nach Anspruch 4, **dadurch gekennzeichnet, dass** dem Material der Polymerfolie Absorberfarbstoff beigemischt ist.

6. Holographischer Datenspeicher nach Anspruch 4 oder 5, **dadurch gekennzeichnet, dass** Absorberfarbstoff in einer auf der Polymerfolie (2) angeordneten Absorberschicht (8) angeordnet ist.

7. Holographischer Datenspeicher nach Anspruch 6, **dadurch gekennzeichnet, dass** die Absorberschicht (8) ein Bindemittel aufweist.

8. Holographischer Datenspeicher nach einem der Ansprüche 1 bis 7, **gekennzeichnet durch** eine Klebeschicht zum Aufkleben des Datenspeichers auf einen Gegenstand.

9. Holographischer Datenspeicher nach einem der Ansprüche 1 bis 8, **gekennzeichnet durch** gespeicherte Information.

10. Verwendung eines Datenspeichers, der eine als Speicherschicht eingerichtete, biaxial verstreckte Polymerfolie (2) aufweist, deren Brechzahl lokal durch Erwärmung veränderbar ist, als holographischer Datenspeicher, wobei optische Phaseninformation über die lokale optische Weglänge in der Polymerfolie (2) abspeicherbar ist und wobei die Polymerfolie (2) beim Auslesen von Information in Transmission durchstrahlt wird.

11. Verwendung nach Anspruch 10, **dadurch gekennzeichnet, dass** der Datenspeicher die Merkmale des holographischen Datenspeichers nach einem der Ansprüche 2 bis 9 aufweist.

12. Verfahren zum Eingeben von Information in einen holographischen Datenspeicher (1) nach einem der Ansprüche 1 bis 9, wobei in einem Hologramm eines Speicherobjektes enthaltene Phaseninformation als zweidimensionale Anordnung berechnet wird und ein Schreibstrahl einer Schreibeinrichtung, vorzugsweise eines Laserlithographen, auf eine Speicherschicht. (2) und/oder gegebenenfalls die zugeordnete Absorberschicht (8) des Datenspeichers (1) gerichtet und entsprechend der zweidimensionalen Anordnung so angesteuert wird, dass die lokale optische Weglänge in der als Speicherschicht (2) eingerichteten Polymerfolie gemäß der Phaseninformation durch lokale Änderung der Brechzahl eingestellt wird.

13. Verfahren nach Anspruch 12, **dadurch gekennzeichnet, dass** die Phaseninformation in Form von Pits (4) vorgegebener Größe in die Speicherschicht (2) eingegeben wird.

14. Verfahren nach Anspruch 13, **dadurch gekennzeichnet, dass** in einem Pit (4) die Phaseninformation in binär kodierter Form gespeichert wird.

15. Verfahren nach Anspruch 13, **dadurch gekennzeichnet, dass** in einem Pit (4) die Phaseninformation in kontinuierlich kodierter Form gespeichert wird; wobei die lokale optische Weglänge in dem Pit (4) aus einem vorgegebenen Wertebereich ausgewählt wird.

16. Verfahren zum Auslesen von Information aus einem holographischen Datenspeicher (1) nach einem der Ansprüche 1 bis 9, wobei Licht, vorzugsweise kohärentes Licht (10), großflächig auf eine Speicherschicht (2) des Datenspeichers (1) gerichtet wird, die Speicherschicht (2) des Datenspeichers (1) in Transmission durchstrahlt wird, wobei das Licht gegebenenfalls an der Reflexionsschicht (6) hinter der als Speicherschicht (2) eingerichteten Polymerfolie reflektiert wird, und als Rekonstruktion der in dem durchstrahlten Bereich enthaltenen Information ein holographisches Bild (16) in einem Abstand zu dem Datenspeicher (1) erfasst wird.

17. Verfahren nach Anspruch 16, **dadurch gekennzeichnet, dass** das holographische Bild von einem mit einer Datenverarbeitungseinrichtung verbundenen CCD-Sensor erfasst wird.

## Claims

1. Holographic data storage medium, having a storage layer (2), whose refractive index can be changed locally and which is set up for the storage of optical phase information via the local optical path length in the storage layer (2) illuminated in transmission when information is read out, **characterized in that** the storage layer is a polymer film (2) set up as a storage layer, **in that** the polymer film (2) is biaxially oriented and **in that** its refractive index can be changed locally by heating.

2. Holographic data storage medium according to Claim 1, **characterized in that** the polymer film (2) has a material which is selected from the following group: polypropylene, polyester, polyvinyl chloride, polyethylene naphthalate, polyethylene terephthalate, polymethylpentene, polyimide.

3. Holographic data storage medium according to Claim 1 or 2, **characterized in that** a reflective layer (6) is arranged behind the polymer film (2).

4. Holographic data storage medium according to one of Claims 1 to 3, **characterized in that** the polymer film (2) is assigned an absorber dye (8) which is set up to at least partly absorb a write beam serving to input information and to give up the heat produced in the process at least partly locally to the polymer film (2).

5. Holographic data storage medium according to Claim 4, **characterized in that** absorber dye is admixed with the material of the polymer film.

6. Holographic data storage medium according to Claim 4 or 5, **characterized in that** absorber dye is arranged in an absorber layer (8) arranged on the polymer film (2).

7. Holographic data storage medium according to Claim 6, **characterized in that** the absorber layer (8) has a binder.

8. Holographic data storage medium according to one of Claims 1 to 7, **characterized by** an adhesive layer for sticking the data storage medium to an object.

9. Holographic data storage medium according to one of Claims 1 to 8, **characterized by** stored information.

10. Use of a data storage medium, which has a biaxially oriented polymer film (2) set up as a storage layer whose refractive index can be changed locally by heating, as a holographic data storage medium, it being possible for optical phase information about the local optical path length to be stored in the polymer film (2) and the polymer film (2) being illuminated in transmission when information is read out.

11. Use according to Claim 10, **characterized in that** the data storage medium has the features of the holographic data storage medium according to one of Claims 2 to 9.

12. Method of putting information into a holographic data storage medium (1) according to one of Claims 1 to 9, phase information contained in a hologram of a stored object being calculated as a two-dimensional arrangement and a write beam from a writing device, preferably a laser lithograph, being aimed at a storage layer (2) and/or possibly the associated absorber layer (8) of the data storage medium (1) and being driven in accordance with the two-dimensional arrangement in such a way that the local optical path length in the polymer film set up as a storage layer (2) is set by a local change in the refractive index in accordance with the phase information.

13. Method according to Claim 12, **characterized in that** the phase information is input into the storage layer (2) in the form of pits (4) of predefined size.

14. Method according to Claim 13, **characterized in that** the phase information is stored in a pit (4) in binary encoded form.

15. Method according to Claim 13, **characterized in that** the phase information is stored in a pit (4) in continuously encoded form, the local optical path length in the pit (4) being selected from a predefined value range.

16. Method of reading information out of a holographic data storage medium (1) according to one of Claims 1 to 9, light, preferably coherent light (10), being aimed over a large area onto a storage layer (2) of the data storage medium (1), the storage layer (2) of the data storage medium (1) being illuminated in transmission, the light possibly being reflected at the reflective layer (6) behind the polymer film set up as a storage layer (2), and a holographic image (16) being registered at a distance from the data storage medium (1) as a reconstruction of the information contained in the illuminated region.

17. Method according to Claim 16, **characterized in that** the holographic image is registered by a CCD sensor connected to a data processing device

## Revendications

1. Mémoire holographique de données qui présente une couche de mémoire (2) dont l'indice de réfraction peut être modifié localement et qui est destinée à conserver en mémoire des informations optiques de phase par l'intermédiaire de la longueur du parcours optique local dans la couche de mémoire (2) traversée en transmission par un rayonnement lors de la lecture d'informations,
**caractérisée en ce que**
la couche de mémoire est une feuille polymère (2) utilisée comme couche de mémoire,
**en ce que** la feuille polymère (2) est étirée biaxialement et
**en ce que** son indice de réfraction peut être modifié localement par échauffement.

2. Mémoire holographique de données selon la revendication 1, **caractérisée en ce que** la feuille polymère (2) présente un matériau sélectionné dans l'ensemble suivant : polypropylène, polyester, poly(chlorure de vinyle), poly(naphtalate d'éthylène), poly(téréphtalate d'éthylène), polyméthylpentène et polyimide.

3. Mémoire holographique de données selon les revendications 1 ou 2, **caractérisée en ce qu'**une couche réfléchissante (6) est disposée derrière la feuille polymère (2).

4. Mémoire holographique de données selon l'une des revendications 1 à 3, **caractérisée en ce qu'**un colorant absorbant (8) destiné à absorber au moins en partie le faisceau d'écriture qui sert à introduire des informations et à délivrer localement à la feuille polymère (2) au moins une partie de la chaleur ainsi dégagée est associé à la feuille polymère (2).

5. Mémoire holographique de données selon la revendication 4, **caractérisée en ce que** le colorant absorbant est mélangé au matériau de la feuille polymère.

6. Mémoire holographique de données selon les revendications 4 ou 5, **caractérisé en ce que** le colorant absorbant est disposé dans une couche absorbante (8) disposée sur la feuille polymère (2).

7. Mémoire holographique de données selon la revendication 6, **caractérisée en ce que** la couche absorbante (8) présente un liant.

8. Mémoire holographique de données selon l'une des revendications 1 à 7, **caractérisée par** une couche adhésive destinée à coller la mémoire de données sur un objet.

9. Mémoire holographique de données selon l'une des revendications 1 à 8, **caractérisée par** l'accumulation d'informations.

10. Utilisation d'une mémoire de données qui présente une feuille polymère (2) étirée biaxialement, utilisée comme couche de mémoire et dont l'indice de réfraction peut être modifié localement par échauffement comme mémoire holographique de données dans laquelle des informations optiques de phase peuvent être conservées en mémoire par l'intermédiaire de la longueur du parcours optique local dans la feuille polymère (2), la feuille polymère (2) étant irradiée en transmission lors de la lecture d'informations.

11. Utilisation selon la revendication 10, **caractérisée en ce que** la mémoire de données présente les caractéristiques de la mémoire holographique de données selon l'une des revendications 2 à 9.

12. Procédé d'introduction d'informations dans une mémoire holographique de données (1) selon l'une des revendications 1 à 9, dans lequel une information de phase que contient un hologramme d'un objet de mémoire est calculé en tant qu'agencement bidimensionnel et un faisceau d'écriture d'un dispositif d'écriture, de préférence un lithographe laser, est dirigé sur une couche de mémoire (2) et/ou éventuellement sur la couche absorbante (8) de la mémoire de données (1) qui lui est associée et est commandé en fonction de l'agencement bidimensionnel de telle sorte que la longueur du parcours optique local dans la feuille polymère utilisée comme couche de mémoire (2) est ajustée par modification locale de l'indice de réfraction en fonction des informations de phase.

13. Procédé selon la revendication 12, **caractérisé en ce que** l'information de phase est introduite dans la couche de mémoire (2) sous la forme de puits (4) de taille prédéterminée.

14. Procédé selon la revendication 13, **caractérisé en ce que** l'information de phase est conservée en mémoire dans un puits (4) sous une forme codée en binaire.

15. Procédé selon la revendication 13, **caractérisé en ce que** dans un puits (4), les informations de phase sont conservées en mémoire sous forme codée en continu, la longueur du parcours optique local dans le puits (4) étant sélectionnée dans une plage prédéterminée de valeurs.

16. Procédé de lecture d'informations dans une mémoire holographique de données (1) selon l'une des revendications 1 à 9, dans lequel de la lumière, de préférence de la lumière cohérente (10), est orientée sur une grande surface de la couche de mémoire (2) de la mémoire de données (1), la couche de mémoire (2) de la mémoire de données (1) étant traversée en transmission par le faisceau, la lumière étant éventuellement réfléchie par la couche réfléchissante (6) située derrière la feuille polymère utilisée comme couche de mémoire (2) et une image holographique (16) étant saisie à distance de la mémoire de données (1) comme reconstruction des informations que contient la partie traversée par le rayonnement.

17. Procédé selon la revendication 16, **caractérisé en ce que** l'image holographique est saisie par un détecteur CCD relié à un dispositif de traitement de données.
